# EUROPEAN PATENT APPLICATION

(11) **EP 4 435 071 A1**
(43) Date of publication of application: **25.09.2024**
(21) Application number: 22909808.2
(22) Date of filing: 13.12.2022
(51) Int. Cl.: C09J 4/06, C09J 4/02, C09J 7/38, C09J 183/04, C09J 183/08, G09F 9/30

(54) **ADHESIVE COMPOSITION AND PREPARATION METHOD THEREFOR, AND OPTICAL ADHESIVE FILM AND USE THEREOF**

(30) Priority: 20.12.2021 CN 202111566821
(71) Applicant: Huawei Technologies Co., Ltd., Shenzhen, Guangdong 518129 (CN)
(72) Inventor: ZHAO, Yingbo, Shenzhen, Guangdong 518129 (CN); LONG, Haohui, Shenzhen, Guangdong 518129 (CN); LI, Jianhui, Shenzhen, Guangdong 518129 (CN); FANG, Jianping, Shenzhen, Guangdong 518129 (CN); XIAO, Tian, Shenzhen, Guangdong 518129 (CN); WU, Jinrong, Chengdu, Sichuan 610065 (CN); WU, Qi, Chengdu, Sichuan 610065 (CN); XIONG, Hui, Chengdu, Sichuan 610065 (CN); HUANG, Yue, Chengdu, Sichuan 610065 (CN)
(74) Representative: Gill Jennings & Every LLP
(86) International application number: PCT/CN2022/138515
(87) International publication number: WO 2023/116494

(57) **Abstract**

This application provides an adhesive composition. The adhesive composition includes an adhesive matrix and a modified polymer. A main chain of the modified polymer includes a boron-oxygen coordinate bond and/or a bridging boron-oxygen coordinate bond. A terminal group or a side chain of the modified polymer or both include at least one of a hydroxyl group, an acrylate group, and a vinyl group. This application further provides a preparation method of the adhesive composition, an optical adhesive film, a foldable screen using the optical adhesive film, and an electronic device using the optical adhesive film or the foldable screen. In this application, the boron-oxygen coordinate bond or the bridging boron-oxygen coordinate bond or both are introduced into the molecular main chain of the modified polymer, so that the adhesive composition has excellent properties in energy absorption and impact resistance while bonding strength is ensured, thereby improving impact resistance properties of the foldable screen and reducing a failure phenomenon such as a black spot or a bright spot on the panel due to external force impact.

## Description

### CROSS-REFERENCE TO RELATED APPLICATIONS

This application claims priority to Chinese Patent Application No. 202111566821.8, filed with the China National Intellectual Property Administration on December 20, 2021, and entitled "ADHESIVE COMPOSITION AND PREPARATION METHOD THEREOF, AND OPTICAL ADHESIVE FILM AND APPLICATION THEREOF", which is incorporated herein by reference in its entirety.

### TECHNICAL FIELD

This application relates to an adhesive composition, a preparation method of the adhesive composition, an optical adhesive film prepared by using the adhesive composition, a foldable screen including the optical adhesive film, and an electronic device including the optical adhesive film or the foldable screen.

### BACKGROUND

An electronic device with a foldable screen brings brand new visual experience and convenience to users in fields of reading, games playing, working, and the like, and therefore is increasingly favored by people.

Currently, a structure of the foldable screen mainly includes a panel and a cover located on a front side of the panel. A base material of the cover is an organic film material having excellent bendability, for example, a polyimide (PI) film or a polyethylene terephthalate (PET) film. An optical adhesive (Optical Clear Adhesive, OCA) or a liquid optical adhesive (Liquid Optical Clear Adhesive, LOCA) is used to bond two adjacent layers of base materials in the cover, and also bond the cover and the panel.

However, most existing OCA/LOCA systems are acrylate polymer systems or silicone polymer systems. An elastic modulus is excessively low, and approximately ranges from 10 kPa to 500 kPa. After the screen is hit, because the organic film material is flexible and cannot well resist external force impact, deformation easily occurs, and therefore relatively strong external force acts on an OCA/LOCA film layer. However, the existing OCA/LOCA has relatively poor impact resistance properties, and impact energy cannot be absorbed or dissipated and is transferred to the panel. As a result, a black spot or a bright spot occurs on the panel.

### SUMMARY

According to a first aspect, an embodiment of this application provides an adhesive composition. The adhesive composition includes an adhesive matrix and a modified polymer. A main chain of the modified polymer includes a boron-oxygen coordinate bond and/or a bridging boron-oxygen coordinate bond. A terminal group or a side chain of the modified polymer or both include at least one of a hydroxyl group, an acrylate group, and a vinyl group.

It can be learned that at least one of the boron-oxygen coordinate bond and the bridging boron-oxygen coordinate bond is introduced into the molecular main chain of the modified polymer in this application. Because there is enough time for the boron-oxygen coordinate bond or the bridging boron-oxygen coordinate bond to break under a low strain rate, the molecular chain is flexible and bendable under a low modulus. Under a high strain rate, a time scale of motion of the molecular chain is far less than the break time for the boron-oxygen coordinate bond or the bridging boron-oxygen coordinate bond. An unbroken boron-oxygen coordinate bond or bridging boron-oxygen coordinate bond hinders the motion of the molecular chain. In this case, it is difficult for the molecular chain to fully move to be disentangled. The adhesive composition shows rigidity and elasticity macroscopically. Due to the foregoing unique breaking and bonding actions of the boron-oxygen coordinate bond or the bridging boron-oxygen coordinate bond, the adhesive composition can have excellent properties in energy absorption and impact resistance while bonding strength is ensured, and can absorb impact of external force to resist impact on the panel. In addition, an active group such as a terminal hydroxyl group, a terminal acrylate group, or a terminal vinyl group is introduced into the terminal group of the modified polymer, to facilitate a cross-linking reaction with the adhesive matrix or an acrylate monomer.

With reference to the first aspect, in some embodiments, a structural formula of the modified polymer is Formula (1) or Formula (2), and structures of Formula (1) and Formula (2) are shown as follows: 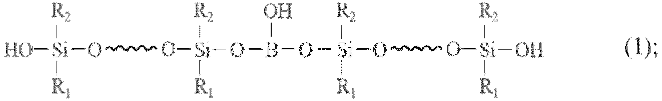 and

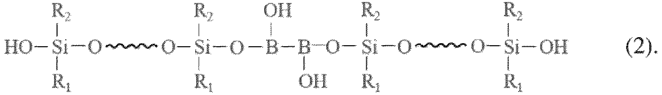

Herein, R₁ and R₂ in Formula (1) and Formula (2) are separately and independently selected from groups in a set including an alkyl radical, an alkoxy radical, an alkenyl group, a cycloalkyl group, and an aryl group.

The adhesive matrix includes at least one of a silicone resin and an epoxy resin.

With reference to the first aspect, in some embodiments, the silicone resin includes polydimethyl siloxane obtained through end capping by using at least one of an alkoxy group, an acyloxy group, and a ketone oxime group. Each organic group in the polydimethyl siloxane is independently selected from any one of an alkyl radical, an alkoxy radical, an alkenyl group, a cycloalkyl group, and an aryl group.

The epoxy resin includes at least one of a bisphenol A epoxy resin and a bisphenol F epoxy resin.

With reference to the first aspect, in some embodiments, a ratio of a mass quantity of the adhesive matrix to a mass quantity of the modified polymer is (10-80) : (50-90) or (10-30) : (50-90).

With reference to the first aspect, in some embodiments, a structural formula of the modified polymer is one of Formula (3) to Formula (6), and structures of Formula (3) to Formula (6) are shown as follows:

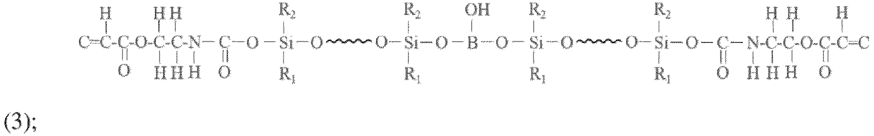

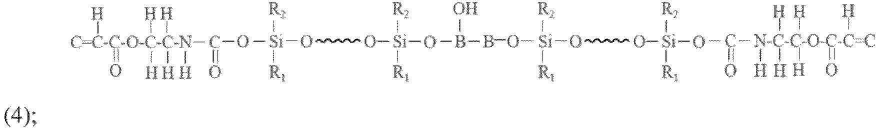

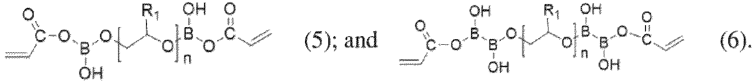

Herein, R₁ and R₂ in Formula (3) to Formula (6) are separately and independently selected from groups in a set including an alkyl radical, an alkoxy radical, an alkenyl group, a cycloalkyl group, and an aryl group.

With reference to the first aspect, in some embodiments, a ratio of a mass quantity of the modified polymer to a mass quantity of the acrylate monomer is (30-80) : (20-50) or (30-80) : (0.1-70).

With reference to the first aspect, in some embodiments, a structural formula of the modified polymer is Formula (7) or Formula (8), and structures of Formula (7) and Formula (8) are shown as follows:

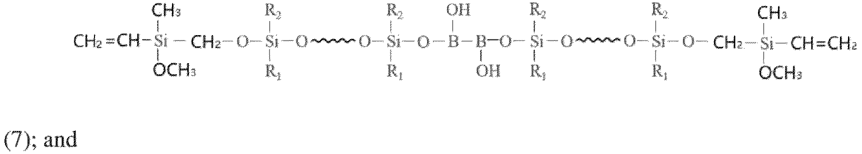

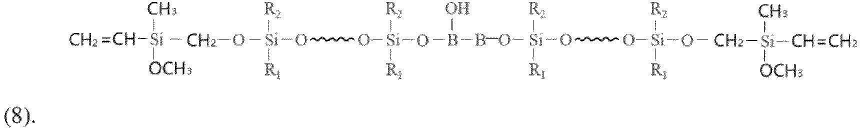

Herein, R₁ and R₂ in Formula (7) and Formula (8) are separately and independently selected from groups in a set including an alkyl radical, an alkoxy radical, an alkenyl group, a cycloalkyl group, and an aryl group.

The adhesive matrix includes a silicone resin.

With reference to the first aspect, in some embodiments, the silicone resin includes polydimethyl siloxane, a terminal group or a side group of the polydimethyl siloxane or both include an exchangeable hydrogen atom. Each organic group in the polydimethyl siloxane is independently selected from any one of an alkyl radical, an alkoxy radical, an alkenyl group, a cycloalkyl group, and an aryl group.

With reference to the first aspect, in some embodiments, a ratio of a mass quantity of the adhesive matrix to a mass quantity of the modified polymer is (10-80) : (50-90).

According to a second aspect, an embodiment of this application provides a preparation method of an adhesive composition. The preparation method includes: mixing an adhesive matrix and a modified polymer to obtain the adhesive composition. A main chain of the modified polymer includes a boron-oxygen coordinate bond and/or a bridging boron-oxygen coordinate bond. A terminal group or a side chain of the modified polymer or both include at least one of a hydroxyl group, an acrylate group, and a vinyl group.

With reference to the second aspect, in some embodiments, the modified polymer is obtained through a reaction of hydroxy-terminated silicone oil with a boric acid and/or a diboric acid, a structural formula of the modified polymer is Formula (1) or Formula (2), and structures of Formula (1) and Formula (2) are shown as follows: 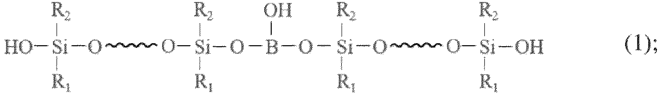 and

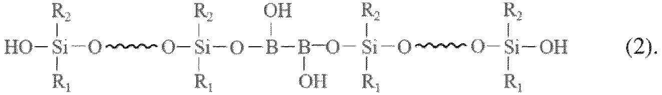

Herein, R₁ and R₂ in Formula (1) and Formula (2) are separately and independently selected from groups in a set including an alkyl radical, an alkoxy radical, an alkenyl group, a cycloalkyl group, and an aryl group.

The adhesive matrix includes at least one of a silicone resin and an epoxy resin.

It can be learned that a chain extension reaction or an end capping reaction occurs between the hydroxy-terminated silicone oil and the boric acid and/or the diboric acid. The reaction easily occurs, and a product has high purity. In this case, it is easy to introduce a boron-oxygen coordinate bond and/or a bridging boron-oxygen coordinate bond into a molecular main chain of a hydroxy-terminated silicone oil polymer. In addition, because a molecular chain of the formed modified polymer includes a hydroxyl group, a cross-linking reaction easily occurs between the modified polymer and the adhesive matrix.

With reference to the second aspect, in some embodiments, the hydroxy-terminated silicone oil includes hydroxy-terminated silicone oil with three types of molecular weights, and viscosities of the hydroxy-terminated silicone oil with the three types of molecular weights are respectively greater than or equal to 15000 cps, between 4000 cps and 15000 cps, and less than or equal to 4000 cps.

With reference to the second aspect, in some embodiments, a ratio of mass quantities of the hydroxy-terminated silicone oil whose viscosities are respectively greater than or equal to 15000 cps, between 4000 cps and 15000 cps, and less than or equal to 4000 cps is (30-60) : (20-50) : (20-30). A total mass quantity of the boric acid and/or the diboric acid is 0.1-5.

It can be learned that a viscosity of the generated modified polymer can be adjusted by adding hydroxy-terminated silicone oil with different molecular weights according to different ratios, to adjust a viscosity of a final adhesive system, thereby meeting different viscosity requirements.

With reference to the second aspect, in some embodiments, the silicone resin includes polydimethyl siloxane obtained through end capping by using at least one of an alkoxy group, an acyloxy group, and a ketone oxime group. Each organic group in the polydimethyl siloxane is independently selected from any one of an alkyl radical, an alkoxy radical, an alkenyl group, a cycloalkyl group, and an aryl group.

The epoxy resin includes at least one of a bisphenol A epoxy resin and a bisphenol F epoxy resin.

It can be learned that the polydimethyl siloxane includes the foregoing group, to facilitate a cross-linking reaction with the hydroxyl group of the modified polymer.

With reference to the second aspect, in some embodiments, a ratio of a mass quantity of the adhesive matrix to a mass quantity of the modified polymer is (10-80) : (50-90) or (10-30) : (50-90).

With reference to the second aspect, in some embodiments, the modified polymer is obtained through a reaction of isocyanate acrylate with an intermediate that is obtained through a reaction of hydroxy-terminated silicone oil with a boric acid and/or a diboric acid, a structural formula of the modified polymer is Formula (3) or Formula (4), and structures of Formula (3) and Formula (4) are shown as follows:

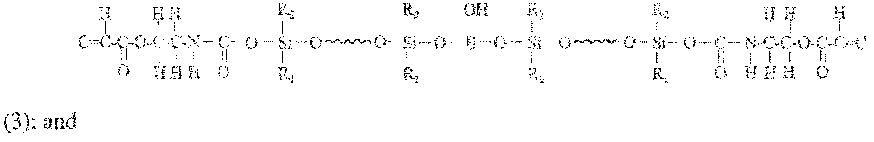

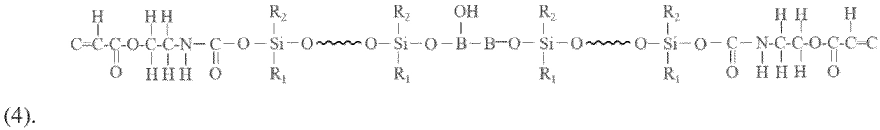

Herein, R₁ and R₂ in Formula (3) and Formula (4) are separately and independently selected from groups in a set including an alkyl radical, an alkoxy radical, an alkenyl group, a cycloalkyl group, and an aryl group.

The adhesive matrix includes an acrylate monomer.

It can be learned that a chain extension reaction or an end capping reaction occurs between the hydroxy-terminated silicone oil and the boric acid and/or the diboric acid, and end capping is performed on a terminal hydroxyl group of the intermediate to introduce an acrylate group. The reaction easily occurs, and a product has high purity. In this case, it is easy to introduce the boron-oxygen coordinate bond and/or the bridging boron-oxygen coordinate bond into the molecular main chain of the hydroxy-terminated silicone oil polymer and introduce the acrylate group. A cross-linking reaction with the acrylate monomer easily occurs.

With reference to the second aspect, in some embodiments, a ratio of a mass quantity of the modified polymer to a mass quantity of the acrylate monomer is (30-80) : (20-50).

With reference to the second aspect, in some embodiments, the modified polymer is obtained through a reaction of a hydroxyacrylic monomer with an intermediate that is obtained through a reaction of a hydroxyl-terminated acrylate polymer with a boric acid and/or a diboric acid; and a structural formula of the modified polymer is Formula (5) or Formula (6), and structures of Formula (5) and Formula (6) are shown as follows:

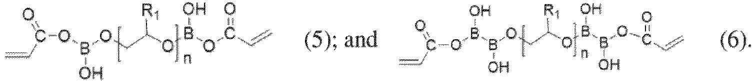

Herein, R₁ and R₂ in Formula (5) and Formula (6) are separately and independently selected from groups in a set including an alkyl radical, an alkoxy radical, an alkenyl group, a cycloalkyl group, and an aryl group, where n is an integer greater than or equal to 1.

The adhesive matrix includes an acrylate monomer.

It can be learned that end capping is performed on the hydroxyl-terminated acrylate polymer by using the boric acid and/or the diboric acid, and end capping is performed on a terminal hydroxyl group of the intermediate by using an acrylic monomer, to introduce an acrylate group. The reaction easily occurs, and a product has high purity. In this case, it is easy to introduce the boron-oxygen coordinate bond and/or the bridging boron-oxygen coordinate bond into a molecular main chain of the acrylate polymer and introduce the acrylate group. A cross-linking reaction with the acrylate monomer easily occurs.

With reference to the second aspect, in some embodiments, a ratio of a mass quantity of the modified polymer to a mass quantity of the acrylate monomer is (30-80) : (0.1-70).

With reference to the second aspect, in some embodiments, the modified polymer is obtained through a reaction of vinyl silicone oil with an intermediate that is obtained through a reaction of a hydroxyl-terminated acrylate polymer with a boric acid and/or a diboric acid; and a structural formula of the modified polymer is Formula (7) or Formula (8), and structures of Formula (7) and Formula (8) are shown as follows:

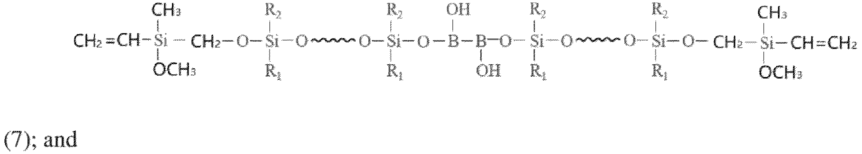

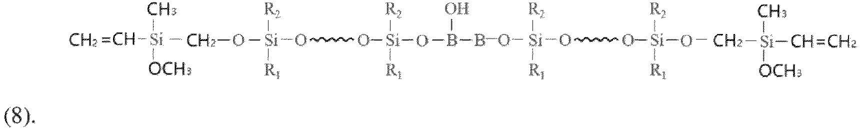

Herein, R₁ and R₂ in Formula (7) and Formula (8) are separately and independently selected from groups in a set including an alkyl radical, an alkoxy radical, an alkenyl group, a cycloalkyl group, and an aryl group.

The adhesive matrix includes a silicone resin.

It can be learned that a chain extension reaction or an end capping reaction occurs between the hydroxy-terminated silicone oil and the boric acid and/or the diboric acid, and end capping is performed on a terminal hydroxyl group of the intermediate by using the vinyl silicone oil, to introduce a vinyl group. The reaction easily occurs, and a product has high purity. In this case, it is easy to introduce the boron-oxygen coordinate bond and/or the bridging boron-oxygen coordinate bond into the molecular main chain of the hydroxy-terminated silicone oil polymer and introduce the vinyl group. A cross-linking reaction with an adhesive matrix in an addition cure organosilicone system easily occurs.

With reference to the second aspect, in some embodiments, the silicone resin includes polydimethyl siloxane, a terminal group or a side group of the polydimethyl siloxane or both include an exchangeable hydrogen atom. Each organic group in the polydimethyl siloxane is independently selected from any one of an alkyl radical, an alkoxy radical, an alkenyl group, a cycloalkyl group, and an aryl group.

With reference to the second aspect, in some embodiments, a ratio of a mass quantity of the adhesive matrix to a mass quantity of the modified polymer is (10-80) : (50-90).

According to a third aspect, an embodiment of this application provides an optical adhesive film. The optical adhesive film is obtained by curing the foregoing adhesive composition. A molecular chain of the optical adhesive film includes a boron-oxygen coordinate bond and/or a bridging boron-oxygen coordinate bond.

With reference to the third aspect, in some embodiments, a transmittance of the optical adhesive film is greater than or equal to 90%, a haze is less than or equal to 2.0%, and a peel strength is greater than or equal to 1.0 N/in.

According to a fourth aspect, an embodiment of this application provides a foldable screen. The foldable screen includes a panel, and at least one substrate layer and at least one layer of optical adhesive film that are stacked on a surface of the panel. One layer of optical adhesive film is disposed between the panel and an adjacent substrate layer, and one layer of optical adhesive film is disposed between two adjacent substrate layers. The optical adhesive film is the foregoing described optical adhesive film.

It can be learned that a boron-oxygen coordinate bond and a bridging boron-oxygen coordinate bond are introduced into a molecular main chain of the optical adhesive film. Due to the foregoing unique breaking and bonding actions of the boron-oxygen coordinate bond or the bridging boron-oxygen coordinate bond, under impact, energy can be absorbed to resist impact on the adhesive film, so that the optical adhesive film has excellent impact resistance properties while excellent bonding properties and optical properties are maintained. A plurality of layers of optical adhesive films and a plurality of substrate layers can well resist external force impact, thereby improving impact resistance properties of the foldable screen and reducing a failure phenomenon such as a black spot or a bright spot on the panel due to external force impact.

According to a fifth aspect, an embodiment of this application provides an electronic device. The electronic device includes the foregoing described optical adhesive film or the foregoing described foldable screen.

### BRIEF DESCRIPTION OF DRAWINGS

FIG. 1 is a schematic diagram of a foldable screen according to an embodiment of this application;
FIG. 2 is a schematic diagram of a drop ball test according to an embodiment of this application; and
FIG. 3 is a diagram of comparison between results of drop ball tests in Example 7 of this application and Comparative example 1.

### Reference numerals of main components:

| | |
|---|---|
| Foldable screen | 100 |
| Panel | 10 |
| Substrate layer | 20 |
| Optical adhesive film | 30 |
| Height | h |

### DESCRIPTION OF EMBODIMENTS

The following describes embodiments of this application with reference to the accompanying drawings in embodiments of this application. Unless otherwise specified, a data range in this application should include an end value.

A commonly-used optical adhesive (OCA/LOCA) has poor impact resistance properties. After the optical adhesive is used in an electronic product with a foldable screen, the foldable screen is prone to a failure phenomenon such as a black spot or a bright spot on the screen due to external force impact.

This application provides an energy-absorbing optical adhesive composition with optical properties, bonding strength, and impact resistance properties. The adhesive composition may be used as a bonding material for bonding different substrates in the electronic product with the foldable screen. However, this is not limited thereto. Components for synthesizing the adhesive composition are optimized and selected, so that the adhesive composition has excellent impact resistance properties while excellent optical properties and bonding properties are maintained.

The adhesive composition includes an adhesive matrix and a modified polymer. A molecular main chain of the modified polymer includes a boron-oxygen coordinate bond and/or a bridging boron-oxygen coordinate bond. A terminal group or a side chain of the modified polymer or both include at least one of a hydroxyl group, an acrylate group, and a vinyl group.

The adhesive matrix may be a base matrix of an acrylate pressure-sensitive adhesive, an organosilicon pressure-sensitive adhesive, or an epoxy resin pressure-sensitive adhesive. For example, the adhesive matrix may be an acrylate monomer, a silicone resin, or an epoxy resin.

It may be understood that, in addition to the foregoing components, the adhesive composition may further include any necessary and unnecessary components required for a conventional pressure-sensitive adhesive, for example, a photoinitiator, an antioxidant, and a plasticizer required for the acrylate pressure-sensitive adhesive; a catalyst and a filler required for the organosilicon pressure-sensitive adhesive; and a cross-linking agent required for the epoxy resin pressure-sensitive adhesive.

At least one of the boron-oxygen coordinate bond and the bridging boron-oxygen coordinate bond is introduced into the molecular main chain of the modified polymer in this application. Because there is enough time for the boron-oxygen coordinate bond or the bridging boron-oxygen coordinate bond to break under a low strain rate, the molecular chain is flexible and bendable under a low modulus. Under a high strain rate, a time scale of motion of the molecular chain is far less than the break time for the boron-oxygen coordinate bond or the bridging boron-oxygen coordinate bond. An unbroken boron-oxygen coordinate bond or bridging boron-oxygen coordinate bond hinders the motion of the molecular chain. In this case, it is difficult for the molecular chain to fully move to be disentangled. The adhesive composition shows rigidity and elasticity macroscopically. Due to the foregoing unique breaking and bonding actions of the boron-oxygen coordinate bond or the bridging boron-oxygen coordinate bond, the adhesive composition can have excellent impact resistance properties while optical properties and bonding properties of the optical adhesive film are ensured, and can absorb impact of external force to resist impact on the panel. In addition, an active group such as a terminal hydroxyl group, a terminal acrylate group, or a terminal vinyl group is introduced into the terminal group of the modified polymer, to facilitate a cross-linking reaction with the acrylate monomer, the silicone resin, and the epoxy resin.

In the following embodiments, different modified polymers are used to modify different optical pressure-sensitive adhesive systems. When optical properties and bonding properties of the optical pressure-sensitive adhesive are ensured, the corresponding optical pressure-sensitive adhesive is provided with excellent properties in energy absorption and impact resistance.

### Embodiment 1 (an acrylate adhesive system)

An embodiment of this application provides an adhesive composition. The adhesive composition includes an acrylate monomer and a modified polymer (PBDMSA). A main chain of the modified polymer (PBDMSA) includes a boron-oxygen coordinate bond and a bridging boron-oxygen coordinate bond. A terminal group is an acrylate group. Based on the introduced boron-oxygen coordinate bond and bridging boron-oxygen coordinate bond, a structure of the modified polymer (PBDMSA 1 or PBDMSA 2) is Formula (3) or Formula (4). Structures of Formula (3) and Formula (4) are shown as follows:

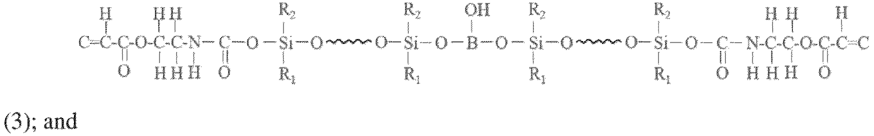

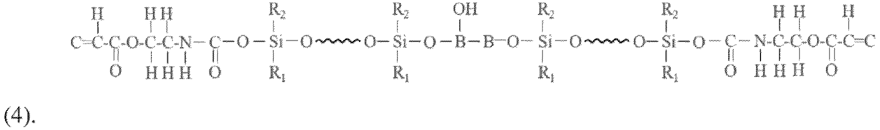

Herein, R₁ and R₂ in Formula (3) and Formula (4) are separately and independently selected from groups in a set including an alkyl radical, an alkoxy radical, an alkenyl group, a cycloalkyl group, and an aryl group.

Further, a ratio of a mass quantity of the modified polymer (PBDMSA 1 or PBDMSA 2) to a mass quantity of the acrylate monomer is (30-80) : (20-50).

Further, the adhesive composition further includes a photoinitiator. A polymerization reaction occurs between the modified polymer (PBDMSA 1 or PBDMSA 2) and the acrylate monomer under effect of the photoinitiator, and then curing is implemented. In this embodiment, the photoinitiator includes but is not limited to a photoinitiator required for an optical acrylate pressure-sensitive adhesive system whose model is, for example, 184 or TPO.

Further, the adhesive composition further includes an antioxidant and a plasticizer. In this embodiment, the antioxidant includes but is not limited to an antioxidant required for an optical acrylate pressure-sensitive adhesive system whose model is, for example, 1010 or DNP, and the plasticizer includes but is not limited to a plasticizer required for an optical acrylate pressure-sensitive adhesive system whose model is, for example, DMP or DOP.

Further, a solvent of the adhesive composition includes but is not limited to methanol, toluene, tetrahydrofuran (THF), ethyl acetate, and the like.

It may be understood that, in addition to the foregoing components, the adhesive composition may further include any necessary and unnecessary components required for a conventional optical acrylate pressure-sensitive adhesive system.

At least one of the boron-oxygen coordinate bond and the bridging boron-oxygen coordinate bond is introduced into a molecular main chain of the optical acrylate pressure-sensitive adhesive in this embodiment. Due to the foregoing unique breaking and bonding actions of the boron-oxygen coordinate bond or the bridging boron-oxygen coordinate bond, the optical acrylate pressure-sensitive adhesive can have excellent properties in energy absorption and impact resistance while optical properties and bonding properties of the optical adhesive film are ensured, and can absorb impact of external force to resist impact on the panel. In addition, the terminal acrylate group is introduced into the terminal group of the modified polymer (PBDMSA 1 or PBDMSA 2), to facilitate a cross-linking reaction with the acrylate monomer.

A preparation method of the adhesive composition specifically includes the following steps:
Step S11: Prepare the modified polymer (PBDMSA 1 or PBDMSA 2).

First, the modified polymer (PBDMS 1 or PBDMS 2) in which the boron-oxygen bond is modified is generated through a chain extension reaction of hydroxy-terminated silicone oil with a boric acid and/or a diboric acid. A structural formula of the modified polymer (PBDMS 1 or PBDMS 2) is Formula (1) or Formula (2). Structures of Formula (1) and Formula (2) are shown as follows: 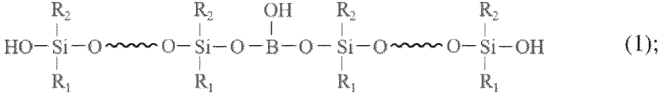 and

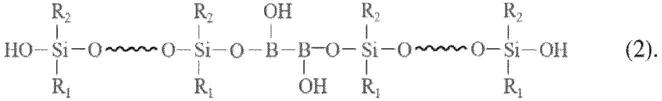

Herein, R₁ and R₂ in Formula (1) and Formula (2) are separately and independently selected from groups in a set including an alkyl radical, an alkoxy radical, an alkenyl group, a cycloalkyl group, and an aryl group. A chain extension reaction or an end capping reaction occurs between the hydroxy-terminated silicone oil and the boric acid and/or the diboric acid. The reaction easily occurs, and a product has high purity. In this case, it is easy to introduce a boron-oxygen coordinate bond and/or a bridging boron-oxygen coordinate bond into a molecular main chain of a hydroxy-terminated silicone oil polymer and introduce a hydroxyl group into a molecular chain of the product, to help subsequently introduce an acrylate group.

Then, end capping is performed on the modified polymer (PBDMS 1 or PBDMS 2) by using isocyanate acrylate (for example, 2-isocyanatoethyl acrylate AOI) under effect of an organotin catalyst, to obtain the modified polymer (PBDMSA 1 or PBDMSA 2).

A reaction process of synthesizing the modified polymer (PBDMSA 1) by using the boric acid is shown as the following equations (I) and (II):

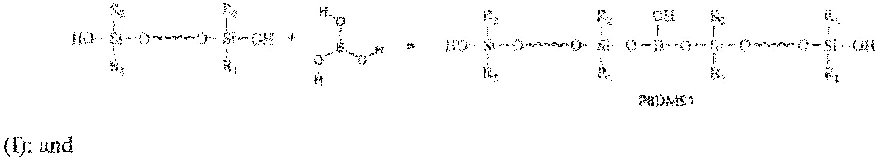

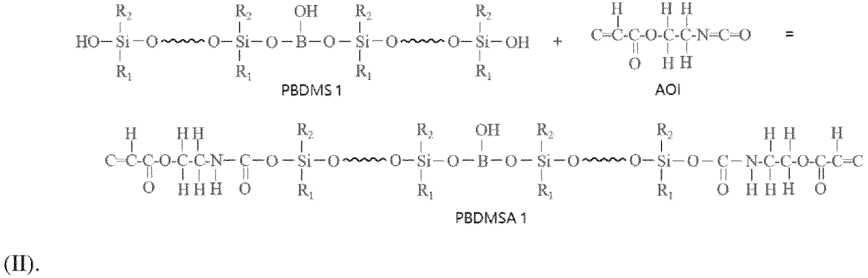

A reaction process of synthesizing the modified polymer (PBDMSA 2) by using the diboric acid is shown as the following equations (III) and (IV):

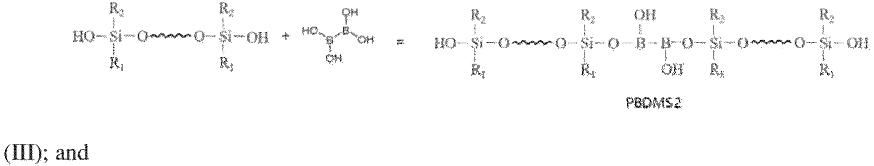

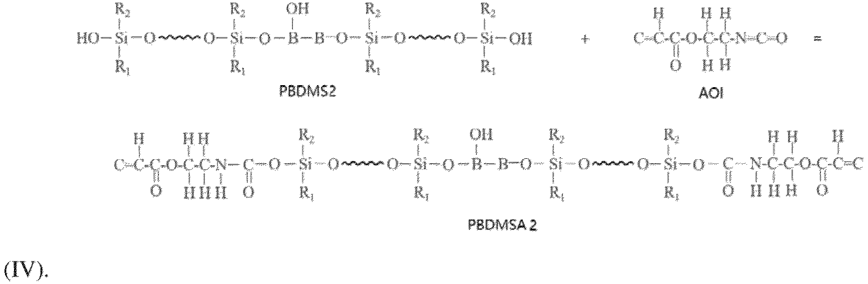

Herein, R₁ and R₂ in Equation (I) to Equation (IV) are separately and independently selected from groups in a set including an alkyl radical, an alkoxy radical, an alkenyl group, a cycloalkyl group, and an aryl group.

Further, the hydroxy-terminated silicone oil is a combination of hydroxy-terminated silicone oil with different molecular weights; and includes high-molecular-mass hydroxy-terminated silicone oil whose viscosity is greater than or equal to 15000 cps, medium-molecular-mass hydroxy-terminated silicone oil whose viscosity is between 4000 cps and 15000 cps, and low-molecular-mass hydroxy-terminated silicone oil whose viscosity is less than or equal to 4000 cps. Mass quantities of the three types of hydroxy-terminated silicone oil are respectively 30-60, 20-50, and 20-30. An average molecular weight and a viscosity of the modified polymer (PBDMS 1 or PBDMS 2) can be regulated by adjusting contents of hydroxy-terminated silicone oil with different molecular weights. A mass quantity of the boric acid/diboric acid is 0.1-5.

Further, the organotin catalyst includes but is not limited to dibutyltin dilaurate (DBTDL).

Further, a solvent in the reaction process includes but is not limited to methanol, toluene, THF, ethyl acetate, and the like.

It may be understood that, in other embodiments, the hydroxy-terminated silicone oil may also react with the boric acid and the diboric acid at the same time, to form a modified polymer (PBDMS) whose molecular chain includes both a boron-oxygen coordinate bond and a bridging boron-oxygen coordinate bond.

Step S12: Mix the modified polymer (PBDMSA 1 or PBDMSA 2) and an acrylate monomer to form the adhesive composition.

Further, the adhesive composition further includes a photoinitiator, an antioxidant, and a plasticizer. It may be understood that, in addition to the foregoing components, the adhesive composition may further include any necessary and unnecessary components required for a conventional optical acrylate pressure-sensitive adhesive system.

When the adhesive composition is used in an optical adhesive film, the optical adhesive film is formed by curing the adhesive composition under light, specifically, through UV photocuring. A cross-linking reaction may occur between the acrylate group in the modified polymer (PBDMSA 1 or PBDMSA 2) and the acrylate monomer to generate the cross-linked and cured optical adhesive film. A molecular chain of the optical adhesive film includes the boron-oxygen coordinate bond and/or the bridging boron-oxygen coordinate bond.

In this embodiment, a transmittance of the optical adhesive film is greater than or equal to 90%, a haze is less than or equal to 2.0%, and a peel strength is greater than or equal to 1.0 N/in, to meet requirements of the optical acrylate adhesive on optical properties and bonding strength. In addition, the bonding strength of the optical adhesive film can be regulated by adjusting a molecular weight of the modified polymer (PBDMSA 1 or PBDMSA 2) and a degree of cross-linking and curing, to meet different requirements.

### Embodiment 2 (another acrylate adhesive system)

Another embodiment of this application provides an adhesive composition. A difference between the adhesive composition and that in the foregoing embodiment is that a structure of a modified polymer (B-PAA) used to modify the acrylate adhesive system in this embodiment is different from that of the modified polymer (PBDMSA) used to modify the acrylate adhesive system in the foregoing embodiment. In this embodiment, a main chain of the modified polymer (B-PAA) includes a boron-oxygen coordinate bond/bridging boron-oxygen coordinate bond, and a terminal group or a side chain of the modified polymer (B-PAA) or both include an acrylate group.

Further, the structure of the modified polymer (B-PAA 1 or B-PAA 2) is Formula (5) or Formula (6), and structures of Formula (5) to Formula (6) are shown as follows: 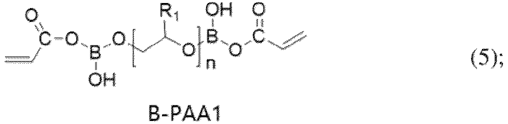 and

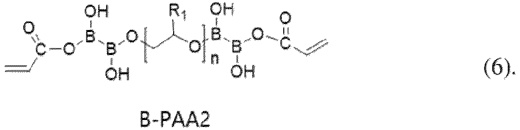

Herein, R₁ and R₂ in Formula (5) and Formula (6) are separately and independently selected from groups in a set including an alkyl radical, an alkoxy radical, an alkenyl group, a cycloalkyl group, and an aryl group, where n is an integer greater than or equal to 1.

At least one of the boron-oxygen coordinate bond and the bridging boron-oxygen coordinate bond is introduced into a molecular main chain of an optical acrylate pressure-sensitive adhesive in this embodiment. Due to the foregoing unique breaking and bonding actions of the boron-oxygen coordinate bond or the bridging boron-oxygen coordinate bond, the optical acrylate pressure-sensitive adhesive can have excellent properties in energy absorption and impact resistance while optical properties and bonding properties of an optical adhesive film are ensured, and can absorb impact of external force to resist impact on a panel. In addition, the acrylate group is introduced into the terminal group of the modified polymer (B-PAA), to facilitate a cross-linking reaction with an acrylate monomer.

A preparation method of the adhesive composition in this embodiment specifically includes the following steps:
Step S21: Prepare the modified polymer (B-PAA 1 or B-PAA 2).

Chain extension or end capping is performed on a hydroxyl-terminated acrylate polymer by using a boric acid or a diboric acid to generate an intermediate. Then, end capping is performed on an intermediate product by using hydroxyethyl acrylate to generate the modified acrylate polymer.

A reaction process of generating the modified polymer (B-PAA 1) by using the boric acid is shown as the following equations (V) and (VI): 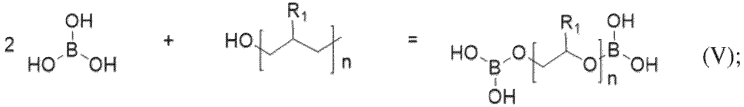 and

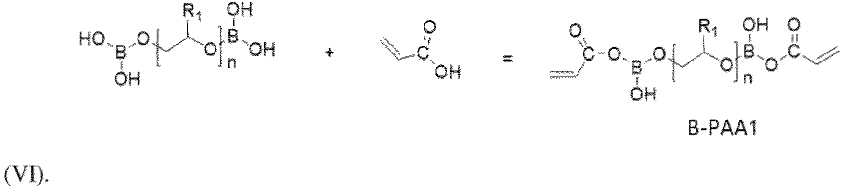

A reaction process of generating the modified polymer (B-PAA 2) by using the diboric acid is shown as the following equations (VII) and (VIII): 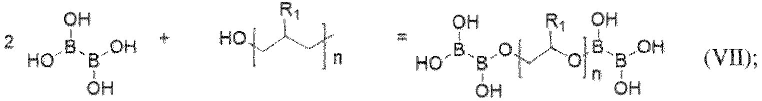 and

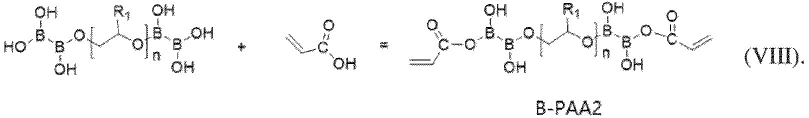

Herein, R₁ in Equation (V) to Equation (VIII) is selected from groups in a set including an alkyl radical, an alkoxy radical, an alkenyl group, a cycloalkyl group, and an aryl group, where n is an integer greater than or equal to 1.

Further, the hydroxyl-terminated acrylate polymer includes but is not limited to hydroxyl-terminated poly(butyl acrylate), hydroxyl-terminated poly(isooctyl acrylate), hydroxyl-terminated polybutadiene, hydroxyl-terminated polyisoprene, and the like. In this embodiment, a mass quantity of the hydroxyl-terminated acrylate polymer is 40 to 80.

Further, a hydroxyacrylic monomer includes but is not limited to hydroxyethyl acrylate, hydroxybutyl acrylate, and the like. In this embodiment, the hydroxyacrylic monomer is hydroxyethyl acrylate, and a mass quantity is 5-40.

Further, a mass quantity of the boric acid or diboric acid is 0.1-20.

Step S22: Mix the modified polymer (B-PAA 1 or B-PAA 2) and an acrylate monomer to form the adhesive composition.

Further, a ratio of a mass quantity of the modified polymer (B-PAA 1 or B-PAA 2) to a mass quantity of the acrylate monomer is (30-80) : (0.1-70).

Further, the adhesive composition further includes a photoinitiator, an antioxidant, and a plasticizer. It may be understood that, in addition to the foregoing components, the adhesive composition may further include any necessary and unnecessary components required for a conventional optical acrylate pressure-sensitive adhesive system.

When the adhesive composition is used in an optical adhesive film, the optical adhesive film is formed by curing the adhesive composition under light, specifically, through UV photocuring. A cross-linking reaction may occur between the acrylate group in the modified polymer (B-PAA 1 or B-PAA 2) and the acrylate monomer to generate the cross-linked and cured optical adhesive film. A molecular chain of the optical adhesive film includes the boron-oxygen coordinate bond and/or the bridging boron-oxygen coordinate bond.

In this embodiment, a transmittance of the optical adhesive film is greater than or equal to 90%, a haze is less than or equal to 2.0%, and a peel strength is greater than or equal to 1.0 N/in, to meet requirements of the optical acrylate adhesive on optical properties and bonding strength. In addition, bonding strength of the optical adhesive film can be regulated by adjusting a molecular weight of the modified polymer (B-PAA 1 or B-PAA 2) and a degree of cross-linking and curing, to meet different requirements.

### Embodiment 3 (an organosilicon adhesive system)

Still another embodiment of this application provides an adhesive composition. The adhesive composition includes the modified polymer (PBDMS 1 and/or PBDMS 2) in Embodiment 1 and a silicone resin in a condensation cure optical organosilicon pressure-sensitive adhesive system.

Further, the silicone resin includes polydimethyl siloxane obtained through end capping by using at least one of an alkoxy group, an acyloxy group, and a ketone oxime group. Each organic group in the polydimethyl siloxane is independently selected from any one of an alkyl radical, an alkoxy radical, an alkenyl group, a cycloalkyl group, and an aryl group. In this embodiment, a structure of the polydimethyl siloxane is shown as Formula (9) below:

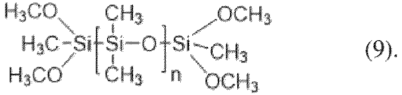

Herein, n is an integer greater than or equal to 1.

Further, a ratio of a mass quantity of the polydimethyl siloxane to a mass quantity of the modified polymer (PBDMS 1 and/or PBDMS 2) is (10-80) : (50-90). In this embodiment, an elastic modulus of the polydimethyl siloxane is less than or equal to 10 MPa, a transmittance is greater than or equal to 90%, and a haze is less than or equal to 5.0%.

Further, the adhesive composition further includes a catalyst and a nano silicon dioxide filler. The catalyst includes but is not limited to a platinum catalyst.

Further, the adhesive composition further includes the nano silicon dioxide filler.

It may be understood that, in addition to the foregoing components, the adhesive composition may further include any necessary and unnecessary components required for the conventional condensation cure organosilicon pressure-sensitive adhesive system.

The adhesive composition is cured under a moist condition to form an optical adhesive film. A condensation reaction may occur between a hydroxyl group in the modified polymer (PBDMS 1 and/or PBDMS 2) and an alkoxy group in the polydimethyl siloxane under a moist condition at a room temperature, to finally generate a cross-linked and cured optical adhesive film. A molecular chain of the optical adhesive film includes a boron-oxygen coordinate bond and/or a bridging boron-oxygen coordinate bond.

Specifically, a cross-linking reaction process and structural formulas of the modified polymer (PBDMS 1 and/or PBDMS 2) and the polydimethyl siloxane shown in Formula (9) are shown as Equation (IX) below:

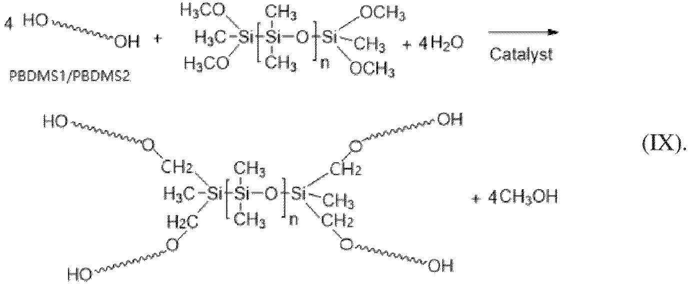

Herein, n is an integer greater than or equal to 1.

In this embodiment, a transmittance of the optical adhesive film is greater than or equal to 90%, a haze is less than or equal to 2.0%, and a peel strength is greater than or equal to 1.0 N/in, to meet requirements of the optical organosilicon pressure-sensitive adhesive on optical properties and bonding strength. In addition, bonding strength of the optical adhesive film can be regulated by adjusting a molecular weight of the modified polymer (PBDMS 1 or PBDMS 2) and a degree of cross-linking and curing, to meet different requirements.

In this embodiment, the modified optical organosilicon pressure-sensitive adhesive system is prepared by introducing at least one of the boron-oxygen coordinate bond and the bridging boron-oxygen coordinate bond into a molecular main chain of the organosilicon pressure-sensitive adhesive. Due to the foregoing unique breaking and bonding actions of the boron-oxygen coordinate bond or the bridging boron-oxygen coordinate bond, the optical organosilicon pressure-sensitive adhesive can have excellent properties in buffering, energy absorption, and impact resistance while optical properties and bonding properties of the optical adhesive film are ensured, and can absorb impact of external force to resist impact on a panel. In addition, the modified polymer (PBDMS 1 and/or PBDMS 2) including the boron-oxygen coordinate bond or the bridging boron-oxygen coordinate bond is cured and molded by using a condensation cure silicone resin to form a polymer with a new structure. In this way, the modified polymer (PBDMS 1 and/or PBDMS 2) including the boron-oxygen coordinate bond or the bridging boron-oxygen coordinate bond does not have a disadvantage of easy creeping flow and no peel strength.

### Embodiment 4 (another organosilicon adhesive system)

Yet another embodiment of this application provides an adhesive composition. The adhesive composition includes a modified polymer (PBDMSC) and a silicone resin in an addition optical organosilicon pressure-sensitive adhesive system. A molecular main chain of the modified polymer (PBDMSC) includes a boron-oxygen coordinate bond and/or a bridging boron-oxygen coordinate bond, and a terminal group or a side chain of the modified polymer (PBDMSC) or both include a hydroxyl group, an acrylate group, and a vinyl group.

A structural formula of the modified polymer (PBDMSC 1 or PBDMSC 2) is shown as Formula (7) or Formula (8):

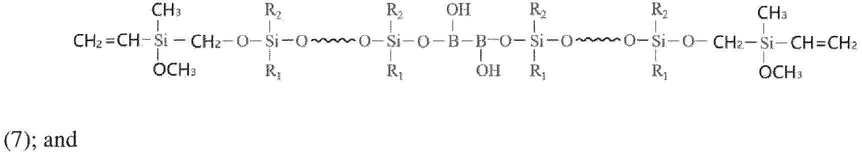

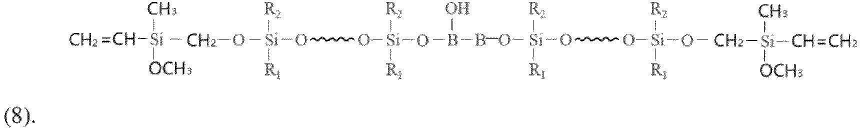

Herein, R₁ and R₂ in Formula (7) and Formula (8) are separately and independently selected from groups in a set including an alkyl radical, an alkoxy radical, an alkenyl group, a cycloalkyl group, and an aryl group.

Further, the silicone resin includes polydimethyl siloxane, a terminal group or a side group of the polydimethyl siloxane or both include an exchangeable hydrogen atom. Each organic group in the polydimethyl siloxane is independently selected from any one of an alkyl radical, an alkoxy radical, an alkenyl group, a cycloalkyl group, and an aryl group. In this embodiment, a structure of the polydimethyl siloxane is shown as Formula (10) below:

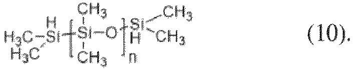

Further, a ratio of a mass quantity of the polydimethyl siloxane to a mass quantity of the modified polymer (PBDMSC 1 and/or PBDMSC 2) is (10-80) : (50-90). In this embodiment, an elastic modulus of the polydimethyl siloxane is less than or equal to 10 MPa, a transmittance is greater than or equal to 90%, and a haze is less than or equal to 5.0%.

Further, the adhesive composition further includes a catalyst and a nano silicon dioxide filler.

It may be understood that, in addition to the foregoing components, the adhesive composition may further include any necessary and unnecessary components required for the conventional addition cure optical organosilicon pressure-sensitive adhesive system.

A preparation method of the adhesive composition in this embodiment specifically includes the following steps:
Step S41: Prepare the modified polymer (PBDMSC 1 or PBDMSC 2).

The modified polymer (PBDMSC 1 or PBDMSC 2) is obtained through end capping performed on the modified polymer (PBDMS 1 or PBDMS 2) in Embodiment 1 by using vinyl silicone oil. A structure of the vinyl silicone oil is shown as Formula (11) below:

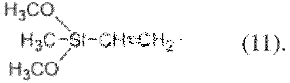

An equation of a reaction between the modified polymer (PBDMS 1 or PBDMS 2) prepared in the foregoing embodiment and vinyl silicone oil is shown as Equation (X) below:

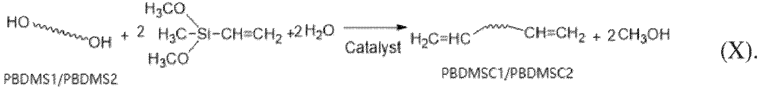

Step S42: Mix the foregoing modified polymer (PBDMSC 1 and/or PBDMSC 2), the silicone resin shown in Formula (10), and another component, to form the adhesive composition.

The adhesive composition is cured under a heating condition to form an optical adhesive film. An addition polymerization reaction may occur between a vinyl group in the modified polymer (PBDMSC 1 or PBDMSC 2) and an exchangeable hydrogen atom in polydimethyl siloxane under a heating condition, to finally generate a cross-linked and cured optical adhesive film. A molecular chain of the optical adhesive film includes a boron-oxygen coordinate bond and/or a bridging boron-oxygen coordinate bond.

Specifically, a cross-linking reaction process and structural formulas of the modified polymer (PBDMS 1 and/or PBDMS 2) and the polydimethyl siloxane shown in Formula (10) are shown as Equation (XI) below:

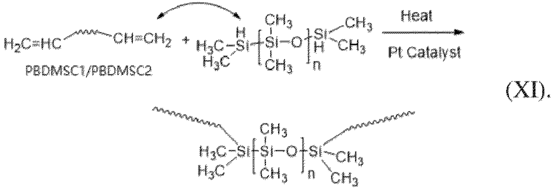

In this embodiment, a transmittance of the optical adhesive film is greater than or equal to 90%, a haze is less than or equal to 2.0%, and a peel strength is greater than or equal to 1.0 N/in, to meet requirements of the optical organosilicon pressure-sensitive adhesive on optical properties and bonding strength. In addition, bonding strength of the optical adhesive film can be regulated by adjusting a molecular weight of the modified polymer (PBDMS 1 and/or PBDMS 2) and a degree of cross-linking and curing, to meet different requirements.

In this embodiment, the another modified optical organosilicon pressure-sensitive adhesive system is prepared by introducing at least one of the boron-oxygen coordinate bond and the bridging boron-oxygen coordinate bond into a molecular main chain of the organosilicon pressure-sensitive adhesive. Due to the foregoing unique breaking and bonding actions of the boron-oxygen coordinate bond or the bridging boron-oxygen coordinate bond, the optical organosilicon pressure-sensitive adhesive can have excellent properties in buffering, energy absorption, and impact resistance while optical properties and bonding properties of the optical adhesive film are ensured, and can absorb impact of external force to resist impact on a panel. In addition, the modified polymer (PBDMSC 1 and/or PBDMSC 2) may be cured and molded by using an addition cure siloxane resin to form a polymer with a new structure. In this way, the modified polymer (PBDMSC 1 and/or PBDMSC 2) including boron does not have a disadvantage of easy creeping flow and no peel strength.

### Embodiment 5 (epoxy resin adhesive system)

Still yet another embodiment of this application provides an adhesive composition. The adhesive composition includes the modified polymer (PBDMS 1 and/or PBDMS 2) in Embodiment 1 and an epoxy resin.

Further, the epoxy resin may be any epoxy resin, and may be specifically at least one of a bisphenol A epoxy resin and a bisphenol F epoxy resin.

Further, the adhesive composition further includes a cross-linking agent. The tertiary amine cross-linking agent includes but is not limited to anhydride, amine, dicyandiamide, and the like.

Further, a ratio of a mass quantity of the epoxy resin to a mass quantity of the modified polymer is (10-30) : (30-60).

It may be understood that, in addition to the foregoing components, the adhesive composition may further include any necessary and unnecessary components required for a conventional optical epoxy resin pressure-sensitive adhesive system.

This embodiment further provides an optical adhesive film. The optical adhesive film is formed by curing the foregoing adhesive composition under a heating condition. A polymerization reaction may occur between a hydroxyl group in the modified polymer (PBDMS 1 or PBDMS 2) and an epoxy group in the epoxy resin under a heating condition, to finally generate a cross-linked and cured optical adhesive film. A molecular chain of the optical adhesive film includes a boron-oxygen coordinate bond and/or a bridging boron-oxygen coordinate bond.

Specifically, a cross-linking reaction process and structural formulas of the modified polymer (PBDMS 1 or PBDMS 2) and the epoxy group in the epoxy resin are shown as Equation (XII) or Equation (XIII):

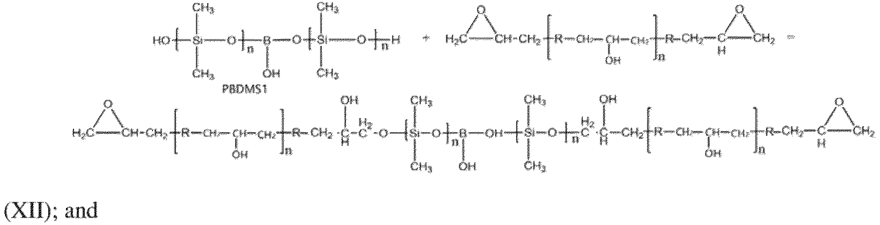

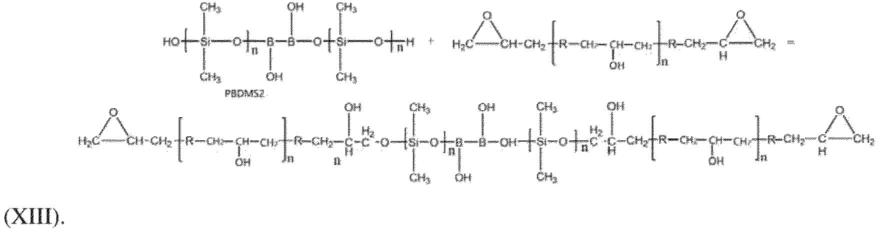

Herein, R in Equation (XII) and Equation (XIII) is a residue of bisphenol A or bisphenol F, and each n is an integer greater than or equal to 1. In this embodiment, R1 and R2 in the modified polymer (PBDMS 1 or PBDMS 2) are both methyl groups.

It may be understood that an epoxy resin adhesive product obtained through Equation (XII) or Equation (XIII) has a linear structure and is in a liquid state, and another filler (for example, nano silicon dioxide or a plasticizer) may be further added for cross-linking and curing under effect of a curing agent such as anhydride or amine, to form a cross-linked mesh structure.

In this embodiment, a transmittance of the optical adhesive film is greater than or equal to 90%, a haze is less than or equal to 2.0%, and a peel strength is greater than or equal to 1.0 N/in, to meet requirements of the optical epoxy resin pressure-sensitive adhesive on optical properties and bonding strength. In addition, bonding strength of the optical adhesive film can be regulated by adjusting a molecular weight of the modified polymer (PBDMS 1 and/or PBDMS 2) and a degree of cross-linking and curing, to meet different requirements.

In this embodiment, the modified optical epoxy resin pressure-sensitive adhesive system is prepared by introducing at least one of the boron-oxygen coordinate bond and the bridging boron-oxygen coordinate bond into a molecular main chain of the epoxy resin pressure-sensitive adhesive. Due to the foregoing unique breaking and bonding actions of the boron-oxygen coordinate bond or the bridging boron-oxygen coordinate bond, the optical epoxy resin pressure-sensitive adhesive can have excellent properties in buffering, energy absorption, and impact resistance while optical properties and bonding properties of the optical adhesive film are ensured, and can absorb impact of external force to resist impact on a panel.

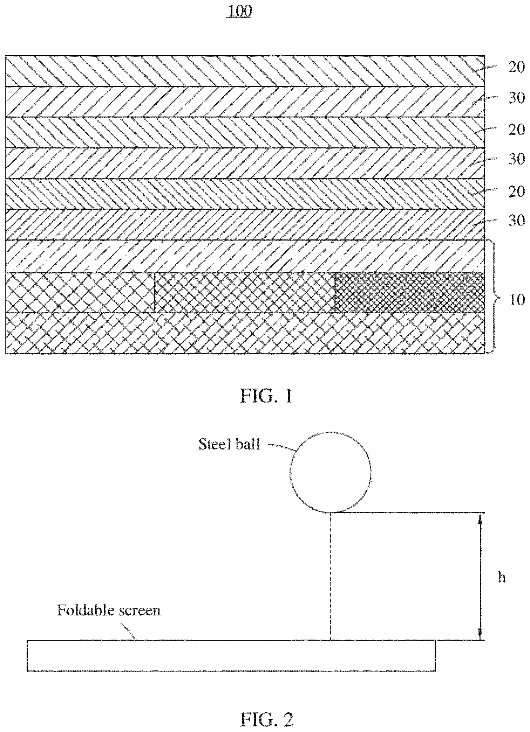

With reference to FIG. 1, this application further provides a foldable screen 100. The foldable screen 100 includes a panel 10, and a plurality of substrate layers 20 and a plurality of layers of optical adhesive films 30 that are stacked on a front side of the panel 10. One layer of optical adhesive film 30 is disposed between the panel 10 and an adjacent substrate layer 20, and one layer of optical adhesive film 30 is disposed between two adjacent substrate layers 20. The optical adhesive film 30 is formed by curing any one of the foregoing adhesive compositions. Different curing manners are used based on the foregoing different adhesive compositions.

Further, the foldable screen 100 may be prepared by using the following two processes.

A first process is: preparing any one of the foregoing adhesive compositions, and performing vacuum deaeration on the adhesive composition; coating the substrate layer 20 with a deaerated adhesive composition, and performing curing to obtain the optical adhesive film 30; covering a surface of the optical adhesive film 30 with a release film to prepare a single-sided optical adhesive tape, and performing die cutting on the single-sided optical adhesive tape; and removing the release film from the die-cut single-sided optical adhesive tape, and then attaching the die-cut single-sided optical adhesive tape to the front side of the panel 10. If the plurality of substrate layers 20 need to be attached, the single-sided optical adhesive tape may be sequentially attached, and deaeration is performed to obtain the foldable screen 100. It may be understood that, when the plurality of substrate layers 20 need to be attached, two surfaces of a middle substrate layer 20 may be coated with the adhesive composition to prepare a double-sided optical adhesive tape. It may be further understood that different quantities of optical adhesive films 30 and optical adhesive films 30 with different thicknesses may be designed according to a requirement of an actual product for impact resistance properties. It may be further understood that, when the plurality of substrate layers 20 need to be attached, the foldable screen 100 may further include a conventional optical adhesive film.

A second process is: preparing any one of the foregoing adhesive compositions, and performing vacuum deaeration on the adhesive composition; dispensing or spraying a deaerated adhesive composition on a front surface of the panel 10 to form an uncured adhesive film (not shown in the figure); and then attaching the substrate layer 20 to a surface of the uncured adhesive film, performing vacuum deaeration, and performing curing after deaeration to obtain the optical adhesive film 30. If the plurality of optical substrate layers 20 need to be attached, the plurality of layers of optical adhesive films 30 may be sequentially formed by repeating the foregoing method, to obtain the foldable screen 100. This process is a stacking-before-curing process, and can be applied to a local bonding case. Large-area adhesive disposing is not needed. An operation is more flexible.

Further, a material of the substrate layer 20 includes but is not limited to PI or PET.

A boron-oxygen coordinate bond and a bridging boron-oxygen coordinate bond are introduced into a molecular main chain of the optical adhesive film 30. Due to the foregoing unique breaking and bonding actions of the boron-oxygen coordinate bond or the bridging boron-oxygen coordinate bond, under impact, energy can be absorbed to resist impact on the adhesive film, so that the optical adhesive film 30 has excellent impact resistance properties while excellent bonding properties and optical properties are maintained. A plurality of layers of optical adhesive films 30 and a plurality of substrate layers 20 can well resist external force impact, thereby improving impact resistance properties of the foldable screen and reducing a failure phenomenon such as a black spot or a bright spot on the panel 10 due to external force impact.

The following further describes embodiments of this application by using specific examples.

### Synthesis example 1

Preparation of a hydroxy-terminated silicone oil polymer (PBDMS 1 or PBDMS 2) in which a boron-oxygen bond is modified is as follows:
A formulation of raw materials for synthesizing the hydroxy-terminated silicone oil polymer (PBDMS 1 or PBDMS 2) in which the boron-oxygen bond is modified is shown in Table 1.

**Table 1**

| Raw material | Typical types/Brands | Mass quantity |
|---|---|---|
| High-molecular-mass hydroxy-terminated silicone oil 1 | Wacker FD20 (Wacker) | 30-60 |
| | Qu DR8500 (Darong New Materials) | |
| Viscosity ≥ 15000 cps | YF70C-1M (Momentive) | |
| | YF70C-2M (Momentive) | |
| | YF70C-5M (Momentive) | |
| | YF70C-8M (Momentive) | |
| | V 20000 (Bluestar) | |
| Medium-molecular-mass hydroxy-terminated silicone oil 2 | Qu DR3 (Darong New Materials) | 20-50 |
| | YF70C-5000 (Momentive) | |
| Viscosity: 4000 cps to 15000 cps | V 5000 (Bluestar) | |
| Low-molecular-mass hydroxy-terminated silicone oil 3 | Wacker WS62M | 20-30 |
| | Xiameter PMX-0156 | |
| Viscosity ≤ 4000 cps | Gelest DMS-S21 | |
| | YF70C-1500 (Momentive) | |
| | YF70C-2000 (Momentive) | |
| | V 500 (Bluestar) | |
| Diboric acid/Boric acid | Sold on the market | 0-5 |
| Solvent | Methanol, toluene, THF, ethyl acetate, and the like | 0-90 |

The formulation in Table 1 was added to a reaction vessel (such as a beaker, a flask, or a reaction kettle) according to corresponding proportions. At a room temperature, stirring was performed at a rotation speed of 5 rpm to 5000 rpm for at least 2 h, and a vacuum degree in the stirring process ranges from -0.08 MPa to -0.095 MPa. This process was implemented until uniform mixing is implemented (specific manifestations are uniform dispersion, no particle settling, and no phase separation). A reaction environment temperature was increased to 50°C to 100°C. The stirring speed and the vacuum degree were maintained. The reaction time was greater than or equal to 4 h, to obtain PBDMS 1 or PBDMS 2.

### Synthesis example 2

Preparation of a modified silicone oil polymer (PBDMSA 1 or PBDMSA 2) is as follows:
A formulation of raw materials for synthesizing the modified silicone oil polymer (PBDMSA 1 or PBDMSA 2) is shown in Table 2.

**Table 2**

| Raw material | Typical types/Brands | Mass quantity |
|---|---|---|
| PBDMS 1 or PBDMS 2 | Synthesis example 1 | 40-70 |
| 2-isocyanatoethyl acrylate | AOI | 15-25 |
| Solvent | Methanol, toluene, THF, ethyl acetate, and the like | 5-40 |
| Organotin catalyst | Dibutyltin dilaurate DBTDL, and the like | 0-5 |
| Polymerization inhibitor | Hydroquinone HQ, benzoquinone BQ, and the like | 0-1 |

PBDMS 1 or PBDMS 2, the solvent, the catalyst, and the polymerization inhibitor in Table 2 were added in a reaction vessel (a beaker, a flask, a reaction kettle, or the like) according to corresponding proportions. Nitrogen was introduced. The raw materials were stirred at a rotation speed of 5 rpm to 5000 rpm. A temperature was increased to 60°C to 100°C. A stirring time was greater than or equal to 1 h. Then, 2-isocyanatoethyl acrylate and the organotin catalyst were added according to proportions for a reaction. It was ensured that a reaction time is greater than or equal to 1 h. Afterwards, introducing the nitrogen was stopped, vacuumizing was performed (a vacuum degree ranges from -0.08 MPa to -0.095 MPa), and stirring was performed at a rotation speed of 5 rpm to 5000 rpm for more than 2 hours until the solvent was fully volatilized. PBDMSA 1 or PBDMSA 2 was obtained through filtering.

### Synthesis example 3

### Preparation of a modified acrylate polymer (B-PAA 1 or B-PAA 2) is as follows:

A formulation of raw materials for synthesizing the modified acrylate polymer (B-PAA 1 or B-PAA 2) is shown in Table 3.

**Table 3**

| Raw material | Typical types/Brands | Mass quantity |
|---|---|---|
| Hydroxyl-terminated polyacrylate | Hydroxyl-terminated poly(butyl acrylate) | 40-80 |
| | Hydroxyl-terminated poly(isooctyl acrylate) | |
| | Hydroxyl-terminated polybutadiene | |
| | Hydroxyl-terminated polyisoprene, and the like | |
| Diboric acid/Boric acid | Sold on the market | 0-20 |
| Hydroxyacrylic | Hydroxyethyl acrylate | 5-40 |
| monomer | Hydroxybutyl acrylate, and the like | |
| Solvent | Methanol, toluene, THF, ethyl acetate, and the like | 0-60 |

The formulation in Table 3 was added to a reaction vessel (such as a beaker, a flask, or a reaction kettle) according to corresponding proportions. At a room temperature, stirring was performed at a rotation speed of 5 rpm to 5000 rpm for at least 2 h, and a vacuum degree in the stirring process ranges from -0.08 MPa to -0.095 MPa. This process was implemented until uniform mixing is implemented (specific manifestations are uniform dispersion, no particle settling, and no phase separation). A reaction environment temperature was increased to 60°C to 100°C. The stirring speed and the vacuum degree were maintained. A reaction time was greater than or equal to 4 h. Then, hydroxyethyl acrylate or hydroxybutyl acrylate was added according to a proportion. The reaction temperature was maintained at 60°C to 100°C, a stirring speed ranges from 5 rpm to 5000 rpm, a time was greater than or equal to 4 h, the vacuum degree ranges from -0.08 MPa to -0.095 MPa, until the reaction is completed, to obtain the modified acrylate polymer (B-PAA 1 or B-PAA 2).

### Synthesis example 4

### Preparation of a modified silicone oil polymer (PBDMSC 1 or PBDMSC 2) is as follows:

A formulation of raw materials for synthesizing the modified silicone oil polymer (PBDMSC 1 or PBDMSC 2) is shown in Table 4.

**Table 4**

| Raw material | Typical types/Brands | Mass quantity |
|---|---|---|
| PBDMS 1 or PBDMS 2 | Synthesis example 1 | 40-70 |
| Vinyl silicone oil | Formula 10 | 15-25 |
| Solvent | Methanol, toluene, THF, ethyl acetate, and the like | 5-40 |
| Catalyst | Lithium hydroxide | 0-5 |

PBDMS 1 or PBDMS 2, vinyl silicone oil, the solvent, and the catalyst in Table 4 were added in a reaction vessel (a beaker, a flask, a reaction kettle, or the like) according to proportions, to obtain PBDMSC 1 or PBDMSC 2 through a reaction at a room temperature.

### Example 1

### Preparation of an adhesive composition in an acrylate system is as follows:

A formulation of raw materials for synthesizing the adhesive composition is shown in Table 5.

**Table 5**

| Raw material | Typical types/Brands | Mass quantity |
|---|---|---|
| PBDMSA 1 and/or PBDMSA 2 | Synthesis example 2 | 30-80 |
| Acrylate monomer | Butyl acrylate, lauryl acrylate, and the like | 20-50 |
| Photoinitiator | 184, TPO, and the like | 0-5 |
| Antioxidant | Antioxidant 1010, antioxidant DNP, and the like | 0-5 |
| Plasticizer | DMP, DOP, and the like | 0-30 |

PBDMSA 1 or PBDMSA 2 or both were mixed uniformly with the acrylate monomer, the photoinitiator, the antioxidant, and the plasticizer according to the foregoing proportions, to obtain the adhesive composition in the acrylate system for subsequent use.

### Example 2

### Preparation of an adhesive composition in another acrylate system is as follows:

A formulation of raw materials for synthesizing the adhesive composition in the another acrylate system is shown in Table 6.

**Table 6**

| Raw material | Typical types/Brands | Mass quantity |
|---|---|---|
| B-PAA 1 and/or B-PAA 2 | Synthesis example 3 | 30-80 |
| Acrylate monomer | Butyl acrylate, lauryl acrylate, and the like | 0-70 |
| Photoinitiator | 184, TPO, and the like | 0-5 |
| Antioxidant | Antioxidant 1010, antioxidant DNP, and the like | 0-5 |
| Plasticizer | DMP, DOP, and the like | 0-50 |

B-PAA 1 or B-PAA 2 or both were mixed uniformly with the acrylate monomer, the photoinitiator, the antioxidant, and the plasticizer according to the foregoing proportions, to obtain the adhesive composition in the acrylate system for subsequent use.

### Example 3

### (1) Preparation of an adhesive composition in an organosilicon system

A formulation of raw materials for preparing the adhesive composition in the organosilicon system is shown in Table 7.

**Table 7**

| Raw material | Typical types/Brands | Mass quantity |
|---|---|---|
| PBDMS 1 and/or PBDMS 2 | Synthesis example 1 | 50-90 |
| Condensation cure organosilicon adhesive | Elastic modulus ≤ 10 MPa | 10-80 |
| | Transmittance ≥ 90%, and Haze ≤ 5.0% | |
| Nano silicon dioxide filler | Cabot CAB-O-SIL series | 0-5 |
| | Evonik AEROSI series, and the like | |
| Catalyst | Platinum catalyst | 0-1 |
| Solvent | Methanol, toluene, THF, ethyl acetate, and the like | 10-90 |

PBDMS 1 and/or PBDMS 2 prepared in Example 1, the condensation cure organosilicon adhesive, the nano silicon dioxide filler, the catalyst, and the solvent in Table 7 were mixed uniformly according to the foregoing proportions, to obtain the adhesive composition in the organosilicon system.

### (2) Preparation of a liquid photocuring adhesive in the organosilicon system

Then, the adhesive composition obtained in (1) was added into a reaction vessel (a beaker, a flask, a reaction kettle, or the like). Vacuumizing was performed. The raw materials were stirred uniformly at a rotation speed of 5 rpm to 5000 rpm. A temperature was increased to at least 60°C. In a stirring process, a vacuum degree was greater than or equal to -200 kPa, and a reaction time was greater than or equal to 1 h, to obtain a liquid optical adhesive in the another organosilicon system for subsequent use.

### Example 4

### (1) Preparation of an adhesive composition in another organosilicon system

A formulation of raw materials for preparing the adhesive composition in the another organosilicon system is shown in Table 8.

**Table 8**

| Raw material | Typical types/Brands | Mass quantity |
|---|---|---|
| PBDMSC 1 and/or PBDMSC 2 | Synthesis example 4 | 50-90 |
| Addition cure organosilicon adhesive | Elastic modulus ≤ 10 MPa | 10-80 |
| | Transmittance ≥ 90%, and Haze ≤ 5.0% | |
| Nano silicon dioxide filler | Cabot CAB-O-SIL series | 0-5 |
| | Evonik AEROSI series, and the like | |
| Catalyst | Platinum catalyst | 0-1 |
| Solvent | Methanol, toluene, THF, ethyl acetate, and the like | 10-90 |

PBDMSC 1 or PBDMSC 2 or both in Table 8 were mixed uniformly with polydimethylsiloxane whose terminal group includes a hydrogen atom, the nano silicon dioxide filler, the catalyst, and the solvent according to proportions, to obtain the adhesive composition in the another organosilicon system.

### (2) Preparation of a liquid photocuring adhesive in the another organosilicon system

Then, the adhesive composition obtained in (1) was added into a reaction vessel (a beaker, a flask, a reaction kettle, or the like). Vacuumizing was performed. The raw materials were stirred uniformly at a rotation speed of 5 rpm to 5000 rpm. A temperature was increased to at least 60°C. In a stirring process, a vacuum degree was greater than or equal to -200 kPa, and a reaction time was greater than or equal to 1 h, to obtain a liquid photocuring adhesive in the another organosilicon system for subsequent use.

### Example 5

### (1) Preparation of an adhesive composition in an epoxy resin system

A formulation of raw materials for preparing the adhesive composition in the epoxy resin system is shown in Table 9.

**Table 9**

| Raw material | Typical types/Brands | Mass quantity |
|---|---|---|
| PBDMS 1 and/or PBDMS 2 | Synthesis example 1 | 50-90 |
| Epoxy resin | Bisphenol A epoxy resin | 10-30 |
| | Bisphenol F epoxy resin | |
| Cross-linking agent | Anhydride | 0-10 |
| | Amine | |
| | Dicyandiamide, and the like | |

PBDMS 1 and/or PBDMS 2 synthesized in Example 1, the epoxy resin, and the cross-linking agent in Table 9 were mixed uniformly according to proportions, to obtain the adhesive composition in the epoxy resin system.

### (2) Preparation of a liquid optical adhesive in the epoxy resin system

The adhesive composition that is in the epoxy resin system and that is prepared in (1) was added into a reaction vessel (a beaker, a flask, a reaction kettle, or the like). Vacuumizing was performed. The raw materials were stirred uniformly at a rotation speed of 5 rpm to 5000 rpm. A temperature was increased to at least 60°C. In a stirring process, a vacuum degree was greater than or equal to -200 kPa, and a reaction time was greater than or equal to 1 h, to obtain a liquid optical adhesive in the epoxy resin system for subsequent use.

### (3) Preparation of a cross-linked mesh-structure epoxy resin adhesive

The linear epoxy resin adhesive prepared in (2) was mixed with a formulation shown in Table 10 below, and curing was further performed to obtain a cross-linked mesh adhesive.

**Table 10**

| Raw material | Typical types/Brands | Mass quantity |
|---|---|---|
| Synthetic product | Product of (2) | 30-80 |
| Nano silicon dioxide filler | Cabot CAB-O-SIL series | 10-30 |
| | Evonik AEROSI series, and the like | |
| Curing agent | Anhydride, amine, and the like | 0-5 |
| Plasticizer | DMP, DOP, and the like | 0-50 |

### Example 6

### Foldable screen:

Two layers of PI substrates and two layers of optical adhesive films are stacked on a front side of a panel. The two layers of optical adhesive films are respectively located between the panel and a PI substrate and between the two layers of PI substrates. A thickness of the PI substrate is 50 µm A thickness of the optical adhesive film is 50 µm. The optical adhesive film is an optical adhesive film of a modified organosilicon adhesive system that includes a bridging boron-oxygen coordinate bond and that is prepared in Example 3 of this application.

### Comparative example 1

### Existing foldable screen:

Two layers of PI substrates and two layers of optical adhesive films are stacked on a front side of a panel. The two layers of optical adhesive films are respectively located between the panel and the PI substrate and between the two layers of PI substrates. A thickness of the PI substrate is 50 µm. A thickness of the optical adhesive film is 50 µm. The optical adhesive film is an optical adhesive film of an existing organosilicon adhesive system.

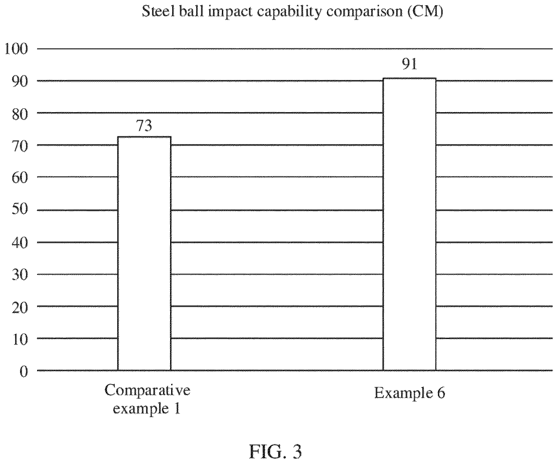

A foldable screen is prepared by using the modified organosilicon adhesive that includes the bridging boron-oxygen coordinate bond and that is prepared in Example 3 of this application. A steel ball impact test is performed. A weight of a steel ball is 32 g. A diameter of the steel ball is 20 mm. The steel ball test is shown in FIG. 2. Failure heights at which the steel ball falls on two types of foldable screens to cause bright spots are tested. Test results are shown in FIG. 3. A minimum failure height at which a bright spot occurs on the foldable screen in Comparative example 1 is 73 cm. A minimum failure height at which a bright spot occurs on the foldable screen in Example 6 of this application is 91 cm. This is an obvious improvement in comparison with Comparative example 1. A boron-oxygen coordinate bond and a bridging boron-oxygen coordinate bond are introduced into a molecular main chain of the optical adhesive film of this application. Due to the foregoing unique breaking and bonding actions of the boron-oxygen coordinate bond or the bridging boron-oxygen coordinate bond, under impact, energy can be absorbed to resist impact on the adhesive film, so that the optical adhesive film has excellent impact resistance properties while excellent bonding properties and optical properties are maintained. A plurality of layers of optical adhesive films and a plurality of substrate layers can well resist external force impact, thereby improving impact resistance properties of the foldable screen and reducing a failure phenomenon such as a black spot or a bright spot on the panel due to external force impact.

It should be noted that the foregoing is merely specific embodiments of this application, but is not intended to limit the protection scope of this application. Any variation or replacement readily figured out by a person skilled in the art within the technical scope disclosed in this application shall fall within the protection scope of this application. When no conflict occurs, embodiments of this application and the features in embodiments may be mutually combined. Therefore, the protection scope of this application should be subject to the protection scope of the claims.

## Claims

1. An adhesive composition, comprising:
an adhesive matrix; and
a modified polymer, wherein
a main chain of the modified polymer comprises a boron-oxygen coordinate bond and/or a bridging boron-oxygen coordinate bond, and a terminal group or a side chain of the modified polymer or both comprise at least one of a hydroxyl group, an acrylate group, and a vinyl group.

2. The adhesive composition according to claim 1, wherein a structural formula of the modified polymer is Formula (1) or Formula (2), and structures of Formula (1) and Formula (2) are shown as follows: 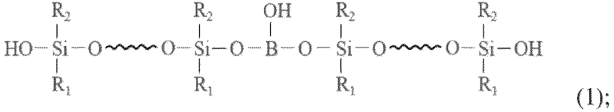 and 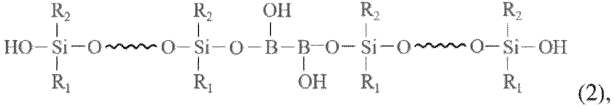 wherein
R₁ and R₂ in Formula (1) and Formula (2) are separately and independently selected from groups in a set comprising an alkyl radical, an alkoxy radical, an alkenyl group, a cycloalkyl group, and an aryl group; and
the adhesive matrix comprises at least one of a silicone resin and an epoxy resin.

3. The adhesive composition according to claim 2, wherein the silicone resin comprises polydimethyl siloxane obtained through end capping by using at least one of an alkoxy group, an acyloxy group, and a ketone oxime group, and each organic group in the polydimethyl siloxane is independently selected from any one of an alkyl radical, an alkoxy radical, an alkenyl group, a cycloalkyl group, and an aryl group; and
the epoxy resin comprises at least one of a bisphenol A epoxy resin and a bisphenol F epoxy resin.

4. The adhesive composition according to claim 2 or 3, wherein a ratio of a mass quantity of the adhesive matrix to a mass quantity of the modified polymer is (10-80) : (50-90) or (10-30) : (50-90).

5. The adhesive composition according to claim 1, wherein a structural formula of the modified polymer is one of Formula (3) to Formula (6), and structures of Formula (3) to Formula (6) are shown as follows: 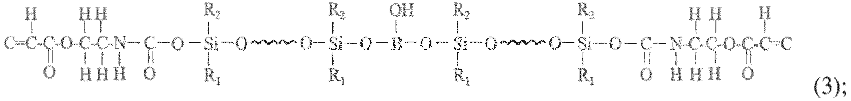 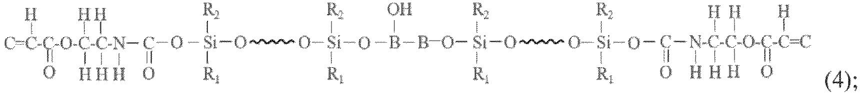 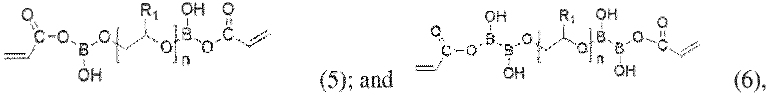 wherein
R₁ and R₂ in Formula (3) to Formula (6) are separately and independently selected from groups in a set comprising an alkyl radical, an alkoxy radical, an alkenyl group, a cycloalkyl group, and an aryl group; and
the adhesive matrix comprises an acrylate monomer.

6. The adhesive composition according to claim 5, wherein a ratio of a mass quantity of the modified polymer to a mass quantity of the acrylate monomer is (30-80) : (20-50) or (30-80) : (0.1-70).

7. The adhesive composition according to claim 1, wherein a structural formula of the modified polymer is Formula (7) or Formula (8), and structures of Formula (7) and Formula (8) are shown as follows: 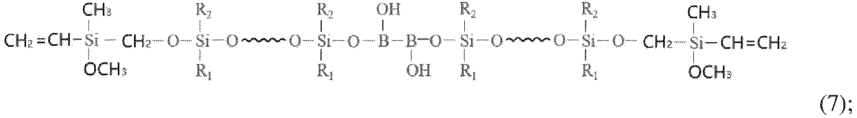 and 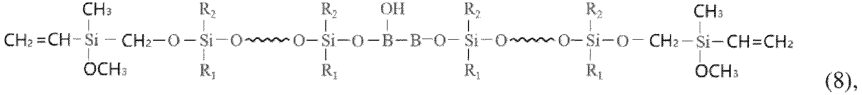 wherein
R₁ and R₂ in Formula (7) and Formula (8) are separately and independently selected from groups in a set comprising an alkyl radical, an alkoxy radical, an alkenyl group, a cycloalkyl group, and an aryl group; and
the adhesive matrix comprises a silicone resin.

8. The adhesive composition according to claim 7, wherein the silicone resin comprises polydimethyl siloxane, a terminal group or a side group of the polydimethyl siloxane or both comprise an exchangeable hydrogen atom, and each organic group in the polydimethyl siloxane is independently selected from any one of an alkyl radical, an alkoxy radical, an alkenyl group, a cycloalkyl group, and an aryl group.

9. The adhesive composition according to claim 7 or 8, wherein a ratio of a mass quantity of the adhesive matrix to a mass quantity of the modified polymer is (10-80) : (50-90).

10. A preparation method of an adhesive composition, comprising: mixing an adhesive matrix and a modified polymer to obtain the adhesive composition, wherein a main chain of the modified polymer comprises a boron-oxygen coordinate bond and/or a bridging boron-oxygen coordinate bond, and a terminal group or a side chain of the modified polymer or both comprise at least one of a hydroxyl group, an acrylate group, and a vinyl group.

11. The preparation method according to claim 10, wherein the modified polymer is obtained through a reaction of hydroxy-terminated silicone oil with a boric acid and/or a diboric acid, a structural formula of the modified polymer is Formula (1) or Formula (2), and structures of Formula (1) and Formula (2) are shown as follows: 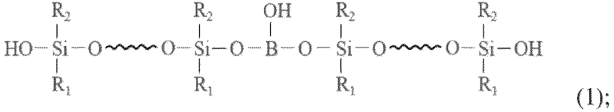 and 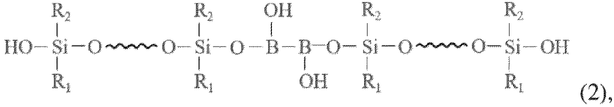 wherein
R₁ and R₂ in Formula (1) and Formula (2) are separately and independently selected from groups in a set comprising an alkyl radical, an alkoxy radical, an alkenyl group, a cycloalkyl group, and an aryl group; and
the adhesive matrix comprises at least one of a silicone resin and an epoxy resin.

12. The preparation method according to claim 11, wherein the hydroxy-terminated silicone oil comprises hydroxy-terminated silicone oil with three types of molecular weights, and viscosities of the hydroxy-terminated silicone oil with the three types of molecular weights are respectively greater than or equal to 15000 cps, between 4000 cps and 15000 cps, and less than or equal to 4000 cps.

13. The preparation method according to claim 12, wherein a ratio of mass quantities of the hydroxy-terminated silicone oil whose viscosities are respectively greater than or equal to 15000 cps, between 4000 cps and 15000 cps, and less than or equal to 4000 cps is (30-60) : (20-50) : (20-30); and
a total mass quantity of the boric acid and/or the diboric acid is 0.1-5.

14. The preparation method according to any one of claims 11 to 13, wherein the silicone resin comprises polydimethyl siloxane obtained through end capping by using at least one of an alkoxy group, an acyloxy group, and a ketone oxime group, and each organic group in the polydimethyl siloxane is independently selected from any one of an alkyl radical, an alkoxy radical, an alkenyl group, a cycloalkyl group, and an aryl group; and
the epoxy resin comprises at least one of a bisphenol A epoxy resin and a bisphenol F epoxy resin.

15. The preparation method according to any one of claims 11 to 14, wherein a ratio of a mass quantity of the adhesive matrix to a mass quantity of the modified polymer is (10-80) : (50-90) or (10-30) : (50-90).

16. The preparation method according to claim 10, wherein the modified polymer is obtained through a reaction of isocyanate acrylate with an intermediate that is obtained through a reaction of hydroxy-terminated silicone oil with a boric acid and/or a diboric acid, a structural formula of the modified polymer is Formula (3) or Formula (4), and structures of Formula (3) and Formula (4) are shown as follows: 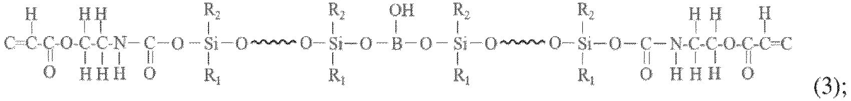 and 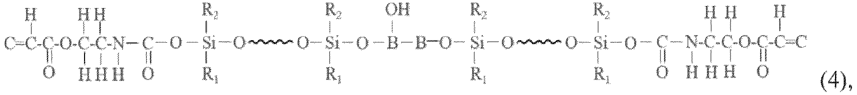 wherein
R₁ and R₂ in Formula (3) and Formula (4) are separately and independently selected from groups in a set comprising an alkyl radical, an alkoxy radical, an alkenyl group, a cycloalkyl group, and an aryl group; and
the adhesive matrix comprises an acrylate monomer.

17. The preparation method according to claim 16, wherein a ratio of a mass quantity of the modified polymer to a mass quantity of the acrylate monomer is (30-80) : (20-50).

18. The preparation method according to claim 10, wherein the modified polymer is obtained through a reaction of a hydroxyacrylic monomer with an intermediate that is obtained through a reaction of a hydroxyl-terminated acrylate polymer with a boric acid and/or a diboric acid, a structural formula of the modified polymer is Formula (5) or Formula (6), and structures of Formula (5) and Formula (6) are shown as follows: 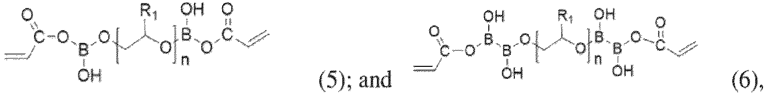 wherein
R₁ and R₂ in Formula (5) and Formula (6) are separately and independently selected from groups in a set comprising an alkyl radical, an alkoxy radical, an alkenyl group, a cycloalkyl group, and an aryl group, wherein n is an integer greater than or equal to 1; and
the adhesive matrix comprises an acrylate monomer.

19. The preparation method according to claim 18, wherein a ratio of a mass quantity of the modified polymer to a mass quantity of the acrylate monomer is (30-80) : (0.1-70).

20. The preparation method according to claim 10, wherein the modified polymer is obtained through a reaction of vinyl silicone oil with an intermediate that is obtained through a reaction of a hydroxyl-terminated acrylate polymer with a boric acid and/or a diboric acid, a structural formula of the modified polymer is Formula (7) or Formula (8), and structures of Formula (7) and Formula (8) are shown as follows: 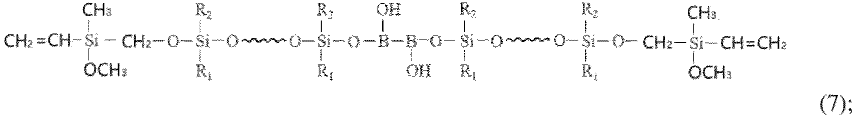 and 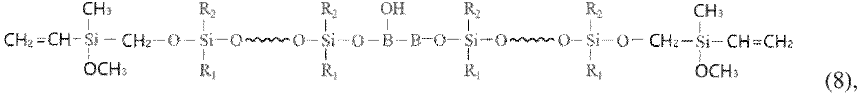 wherein
R₁ and R₂ in Formula (7) and Formula (8) are separately and independently selected from groups in a set comprising an alkyl radical, an alkoxy radical, an alkenyl group, a cycloalkyl group, and an aryl group; and
the adhesive matrix comprises a silicone resin.

21. The preparation method according to claim 20, wherein the silicone resin comprises polydimethyl siloxane, a terminal group or a side group of the polydimethyl siloxane or both comprise an exchangeable hydrogen atom, and each organic group in the polydimethyl siloxane is independently selected from any one of an alkyl radical, an alkoxy radical, an alkenyl group, a cycloalkyl group, and an aryl group.

22. The preparation method according to claim 20 or 21, wherein a ratio of a mass quantity of the adhesive matrix to a mass quantity of the modified polymer is (10-80) : (50-90).

23. An optical adhesive film, formed by curing the adhesive composition according to any one of claims 1 to 9, wherein a molecular chain of the optical adhesive film comprises a boron-oxygen coordinate bond and/or a bridging boron-oxygen coordinate bond.

24. The optical adhesive film according to claim 23, wherein a transmittance of the optical adhesive film is greater than or equal to 90%, a haze is less than or equal to 2.0%, and a peel strength is greater than or equal to 1.0 N/in.

25. A foldable screen, comprising a panel, and at least one substrate layer and at least one layer of optical adhesive film that are stacked on a surface of the panel, wherein one layer of optical adhesive film is disposed between the panel and an adjacent substrate layer, one layer of optical adhesive film is disposed between two adjacent substrate layers, and the optical adhesive film is the optical adhesive film according to claim 23 or 24.

26. An electronic device, comprising the optical adhesive film according to claim 23 or 24 or the foldable screen according to claim 25.
